# EUROPEAN PATENT APPLICATION

(11) **EP 1 329 164 A1**
(43) Date of publication of application: **23.07.2003**
(21) Application number: 02077085.5
(22) Date of filing: 28.05.2002
(51) Int. Cl.: A23L 1/39, A23L 1/24, A23L 1/221

(54) **Oily paste which contains herbs**

(30) Priority: 20.06.2001 EP 01202389
(71) Applicant: UNILEVER N.V., 3013 AL Rotterdam (NL); UNILEVER PLC, London EC4P 4BQ (GB)
(72) Inventor: van Heetvelde, Ingeborg Sonja Viktor, 3133 AT Vlaardingen (NL); Flöter, Eckard, 3133 AT Vlaardingen (NL)
(74) Representative: Sikken, Antonius H. J. M.

(57) **Abstract**

An aromatic paste consisting of a blended mixture containing 3-20 wt.% of basil leaves, 1-30 wt.% of nuts or seeds, 0-20 wt.% of tomato flesh, 0-20 wt.% of tomato paste, 0-25 wt.% of sundried tomatoes, 5-30 wt.% of cheese, 20-60 wt.% of a vegetable fat, 0-2 wt.% of citric acid, 0-1 wt.% of potassium sorbate and 0-5 wt.% of salt, characterized in that the paste is a water and oil emulsion which is either fat continuous or bi-continuous.

A preferred paste is pesto which typically contains basil leaves, pine seeds, Parmesan cheese and olive oil and which additionally contains about 5 wt.% of a saturated fat which preferably is hydrogenated high erucic rapeseed oil or hydrogenated palm oil. In contrast to traditional pesto's the invented paste will resist soaking the crumb of bread on which it has been spread and so will increase by prolonged freshnes the shelf life of bread snacks spreaded with that paste.

## Description

The present invention relates to an oily herbs containing paste having the consistency of and comprising pesto which is a viscous, semi-liquid mixture containing herbs, particularly basil leaves, cheese, olive oil and usually also nuts or seeds and which is known for its employment in the preparation of pasta's and other Italian style dishes.

### BACKGROUND OF THE INVENTION

Generally mixtures containing oil and herbs are known from the prior art. In EP 775444 a pourable mixture is described comprising herbs, cheese, salt and at least 50 wt.% of liquid oil containing some hardened fat.
WO 98/47386 describes another pourable fat composition comprising an oil containing a hardened fat component and additionally a thickening agent. Herbs and nuts are optional ingredients.

Pesto is a well known food ingredient which finds its origin in the Italian kitchen. The aromatic paste is highly appreciated for its food flavouring qualities.
Recipes for pesto are abundant in Italian cooking books. Presently, because of the popularity of the Italian kitchen, pesto is increasingly employed for cooking outside Italy. Originally, pesto is only prepared for instantaneous use by blending a mixture comprising fresh basil leaves, pine seeds, Parmesan cheese and olive oil until a greenish, homogeneous paste has been obtained. A red variety which contains more water is prepared by including tomatoes.

The product structure of pesto can be described as a thick water continuous emulsion with a dispersed fat phase. For convenience reasons pesto has become available as an industrially made ready-for-use product packed in glass jars. Since pesto during storage is vulnerable for separation of the dispersed oil phase, the label bears the recommendation "to stir before use".

Presently a market has developed for ready-to-eat bread snacks comprising rolls and sandwiches. These snacks commonly contain relatively dry fillings such as cheese, meat and fish, optionally combined with fresh ingredients such as lettuce, cucumber, tomatoes etc. which contain a lot of moisture. The latter snacks obviously have a short shelf life. Also pesto is a valued ingredient, particularly in combination with vegetable material. It is commonly used by spreading it on the crumb of the bread as an underlayer for the other snack components. Because of the pesto's water content the bread crumb gradually becomes soggy which makes the roll unacceptable for consumption. As a consequence a snack spreaded with pesto has a shelf life seldom exceeding one day.

Expansion of the fresh snack assortment in shops, snack bars, fuel stations, waiting rooms and similar sale outlets with pesto containing snacks, is seriously limited by quick deterioration of these snacks.

According to a method described in EP 334568 the dough used for preparation of the sandwich bread is given a special treatment. Other prior art methods propose the use of a barrier layer by spreading a moisture repellent product which separates the pesto from the bread crumb. US 5130151 e.g. describes a wax based moisture barrier which is generally applied on edible products to separate ingredients with different moisture contents and water activities. Such moisture barrier causes a waxy mouthfeel.

For pesto containing bread snacks the prior art use of oleaginous materials have appeared to be not satisfactory.

For resolving the sogginess problem we have found a solution which is simple, natural and without impact on the taste.

### SUMMARY OF THE INVENTION

We have found an improved oily, herbs containing paste as defined in the claims. The crumb of a bread snack spreaded with that paste, which also comprises pesto, resists becoming soggy for several days. This helps the snack to maintain its freshness condition. Bread snacks comprising that paste also form part of the invention.

### DETAILS OF THE INVENTION

The prolonged freshness of the invented bread snack is at least partially attributed to the fat continuity of the paste. We have found a composition of the constituting fat ingredient which causes this fat continuity.
According to a preferred fat composition it contains a small amount, preferably 0.5-10 wt.%, of saturated HHH triglycerides, where H denotes saturated fatty acid residues which may be identical or different and have a chain length of more than 15 carbon atoms. Those triglycerides comprise monoacid HHH triglycerides of which the fatty acid residues are identical. Preferably HHH = SSS, where SSS denotes the triglyceride having a glyceride backbone substituted with three stearic acid residues. The content of monoacid triglycerides should be limited and preferably does not exceed the amounts as specified in claim 2 and 3.

When for the paste preparation fats are used with a content of saturated monoacid triglycerides complying with those limits, the described beneficial paste properties most likely will occur.
Preferably, a vegetable fat is used in which at least one mixed HHH triglyceride is present in an amount of at least 15 wt.% on total HHH triglycerides.

Fats which realize a fat continuous or bi-continuous emulsion are suitably obtained by blending a common vegetable oil with a selected fully saturated fat. Since the triglyceride compositions of vegetable oils and saturated fats are known or can be established by standard procedures without undue effort, the skilled man is able to make a proper selection of fats for a blend which complies with the specification of claim 2.

The common vegetable oil suitably is chosen from the group consisting of sunflower oil, sesame oil, groundnut oil and rapeseed oil, but for a real pesto composition prferably an olive oil is chosen, more preferably a virgin olive oil because of its rich aromatic flavour.

Suitably the fully saturated fat is a hydrogenated fat, preferably fully hydrogenated high erucic rapeseed oil or fully hydrogenated palm oil or mixtures thereof.

A suitable content of vegetable fat is about 45 wt.%, but other contents in the range of 20-60 wt.% are also possible.
It should be noted that this amount refers to the amount of the vegetable fat ingredient and not to vegetable fat present in the added nuts and seeds.

Fat continuity means that the water content of the emulsion consists of aqueous droplets dispersed in the oil phase. Consequently the droplets are isolated from each other.
A water continuous emulsion, to the contrary, contains the oil phase as dispersed droplets. An intermediate condition of water and oil distribution is denoted as a bi-continuous emulsion. A part of its aqueous phase is not dispersed, which can be established by an electrical conductivity measurement. A fully fat continuous emulsion has a conductivity of zero microSiemens. Tap water has a conductivity of at least 1000 microSiemens depending on the content of dissolved ions.
The bi-continuous paste of the present invention is characterized by an electrical conductivity of < 300 microSiemens, preferably < 250 microSiemens, more preferably < 200 microSiemens, still more preferably < 150 microSiemens.

Without wishing to be bound by theory it is believed that the paste by becoming fat continuous causes that the major part of the water of the pesto is prevented to make contact with the bread crumb.

Basil is an essential ingredient for the preparation of pesto. Although use of freshly harvested basil leaves is preferred, basil leaves when preserved properly e.g. by quick freezing after harvest, may also result in a satisfactory product.

Use of Italian cheese is recommended for obtaining the typical pesto taste. Parmesan cheese and Pecorino cheese are preferred cheeses. The paste contains at least 5 wt.% of cheese, but the cheese content should not exceed 30 wt.%.

In recipes for traditional pesto's considerable amounts of cooking salt are found in order to prevent microbiological spoilage during storage. For organoleptic and nutritional reasons the sodium content of the present paste is kept low. The amount of sodium chloride is 0 - 5 wt.% and the amount of monosodium glutamate 0 - 1 wt.%. Taken together the amounts of sodium chloride and monosodium glutamate preferably do not exceed 20 wt.% of the content of basil leaves which is less than found in prior art recipes.

Nuts or seeds are an essential ingredient of which the amount is in the range of 1 - 30 wt.%. Preferably pine seeds or cashew nuts are used.

Preferred features of the paste are that it has a relatively low pH being 4 - 5 and a water activity being only 0.80 - 0.95. Up to 1 wt.%, preferably about 0.13 wt.% of potassium sorbate may be added.
Citric acid up to 2 wt.% is another optional ingredient.

Red pesto varieties are obtained by using tomatoes as an ingredient, even up to 45 wt.%, which generally means a substantial increase of the water content. However, use of the invention has shown that even the red pesto's show an improved shelf life and so helps to prolonge the freshness of bread snacks containing such red pesto. Conductivity measurements show that a red pesto according to the present invention often is bi-continuous.

The tomato ingredient is applied in the form of one or more of the group consisting of tomato flesh, tomato paste (both up to 20 wt.%) and dried tomatoes (up to 25 wt.%).

The invention most easily is worked by substituting the fat of a traditional pesto recipe by the fat selected according to the invention. Within the restraints of claim 1 one may depart from those traditional recipes. For obtaining the benefits of the invention it is sufficient that the emulsion is fat continuous or bi-continuous.

The paste according to the invention exhibits storage stability and a good consistency comprising plasticity and spreadability. Even after a few months of storage no phase separation is observed. The stirring-before-use recommendation becomes redundant for such stable paste.

Another benefit is that for preservation the pesto preparation in contrast to present industrially prepared pesto's does not need a heat treatment neither a high salt content. A heat treatment always has a detrimental effect on taste, colour and flavour. Even without heat treatment or high salt content the paste remains microbiologically safe and stable for at least 3 months when stored under chilled conditions.
Besides a small amount of fully saturated, often hydrogenated fat, the present product does not need an artificial ingredient. Therefore it fits in "the natural food trend". For a bread snack which is promoted for its fresh and natural appearance this is an important aspect.

The most valuable property of the paste according to the present invention is, as said before, that it helps bread snacks to maintain a fresh appearance. Because of the ensuing increased shelf life, "Italian style" bread snacks have obtained a considerable sales potential for outlets where daily refreshing the store of bread snacks is not possible.

The invention is illustrated by the following examples.

### Example 1

**TABLE I**

| Cooking Book Recipe For Fresh Green Pesto | |
|---|---|
| **Collect** | **grams** |
| Fresh basil leaves | 50 |
| Pine seeds | 50 |
| Fresh parsley | 25 |
| Garlic | 10 |
| Salt | 5 |
| Olive oil | 80 |
| Cheese (Parmesan or Pecorino) | 50 |

Stir the ingredients thoroughly so that a thick paste is obtained. Finally freshly ground white pepper is added at taste.

### Example 2

### GREEN PESTO

The ingredients mentioned in Table II were collected. The basil leaves were first sterilized (by washing with a 0.3 wt.% citric acid solution and 0.1 wt.% potassium sorbate) and then dried (e.g. by centrifuge).

The ingredients except the cheese and the fat blend were mixed thoroughly. Then the cheese was admixed by vigorous stirring. Finally the fat blend was added and by mild blending a thick homogeneous paste was obtained. The electrical conductivity of various samples prepared according to this example did not exceed 5 microSiemens.

**TABLE II**

| Green pesto according to the invention | |
|---|---|
| **Collect** | **wt.%** |
| Fresh basil leaves | 11.60 |
| Pine nuts | 20.87 |
| Salt | 0.75 |
| Oil blend (95 wt.% olive oil, 5 wt.% RP70*) | 46.38 |
| Cheese (Parmesan) | 19.71 |
| Citric acid (50% aq. Solution) | 0.56 |
| Potassium sorbate | 0.13 |
| Total | 100 |

| | |
|---|---|
| * fully hydrogenated high erucic rapeseed oil (Admul RPH70, ex QUEST) | |

Even after 8 weeks of storage no visible oil separation could be observed.

### Example 3

### RED PESTO

The ingredients mentioned in Table III were collected.

**TABLE III**

| Red pesto | |
|---|---|
| **Collect** | **wt.%** |
| Sterilised peeled tomatoes | 10.16 |
| Sterilised tomato paste | 2.88 |
| Sundried tomatoes (in oil) | 13.54 |
| Fresh basil leaves | 8.47 |
| Pine seeds | 8.47 |
| Salt | 5 |
| Oil blend (95 wt.% olive oil, 5 wt.% RP70*) | 40.63 |
| Cheese (Parmesan) | 14.39 |
| Potassium sorbate | 0.13 |
| Salt | 0.66 |
| Citric acid (50% solution) | 0.68 |
| Total | 100 |

| | |
|---|---|
| * fully hydrogenated high erucic rapeseed oil (Admul RPH70, ex QUEST) | |

The basil leaves were first sterilized (by washing with a 0.3 wt.% citric acid solution and 0.1 wt.% potassium sorbate) and then dried (e.g. by centrifuge).
The ingredients except the cheese and the fat blend were mixed thoroughly. Then the cheese was admixed by vigorous stirring. Finally the fat blend was added and by mild blending a thick homogeneous paste was obtained. The electrical conductivity of various samples of the red pesto prepared according to this example was in the range 100 - 250 microSiemens.

Even after 8 weeks of storage no visible oil separation could be observed.

## Claims

1. An aromatic edible paste consisting of a mixture comprising
3-20 wt.% of basil leaves,
1-30 wt.% of nuts or seeds,
0-20 wt.% of tomato flesh,
0-20 wt.% of tomato paste,
0-25 wt.% of sundried tomatoes,
5-30 wt.% of cheese,
0-2 wt.% of citric acid,
0-1 wt.% of potassium sorbate,
0-5 wt.% of salt and
20-60 wt.% of a vegetable fat
**characterized in that** the paste is a water and oil emulsion which is either fat continuous or bi-continuous.

2. A paste according to claim 1, **characterized in that** the vegetable fat contains 0.5-10 wt.% of saturated HHH triglycerides, where H denotes saturated fatty acid residues which may be identical or different and have a chain length of more than 15 carbon atoms and where no type of monoacid HHH triglycerides is present in an amount exceeding 70 wt.% on total HHH triglycerides.

3. A paste according to claim 2, **characterized in that** no type of monoacid HHH triglycerides is present in an amount exceeding 65 wt.% on total HHH triglycerides.

4. A paste according to claims 2 or 3, **characterized in that** the amount of SSS triglycerides where S is a stearic acid residue does not exceed 70 wt.%, preferably does not exceed 65 wt.% on total HHH triglycerides.

5. A paste according to the preceding claim, **characterized in that** at least one mixed HHH triglyceride is present in an amount of at least 15 wt.% on total HHH triglycerides.

6. A paste according to one or more of the preceding claims, **characterized in that** the vegetable fat is a fat blend containing 1-10 wt.%, preferably 3-7 wt.% (on total vegetable fat) of either fully hydrogenated high erucic rapeseed oil or fully hydrogenated palm oil or a mixture of both.

7. A paste according to any one of the preceding claims containing a mixture of
5-20 wt.% of basil leaves,
10-30 wt.% of pine seeds,
10-30 wt.% of cheese,
0-2 wt.% of citric acid,
0-1 wt.% of potassium sorbate,
0-5 wt.% of salt,
20-60 wt.% of the vegetable fat as defined in any one of claims 2-6.

8. A paste according to any one of the preceding claims containing a mixture of
3-20 wt.% of basil leaves,
5-20 wt.% of tomato flesh,
0.1-20 wt.% of tomato paste,
5-25 wt.% of sundried tomatoes,
5-30 wt.% of cheese,
0-2 wt.% of citric acid,
0-1 wt.% of potassium sorbate,
0-5 wt.% of salt and
20-60 wt.% of the vegetable fat as defined in any one of claims 2-6.

9. A paste according to any one of the preceding claims, **characterized in that** the cheese is an Italian cheese, preferably chosen from the group consisting of Parmesan cheese and Pecorino cheese.

10. A paste according to any one of the preceding claims, **characterized in that** it contains pine seeds or cashew nuts.

11. A paste according to any one of the preceding claims, **characterized in that** the vegetable fat at least partially consists of olive oil, preferably of virgin olive oil.

12. A paste according to any one of the preceding claims, **characterized in that** it contains 0-1 wt.% of monosodium glutamate.

13. A paste according to any one of the preceding claims, **characterized in that** the combined amounts of sodium chloride and monosodium glutamate do not exceed 20 wt.% of the basil leaves content.

14. A bread snack which comprises a paste according to any one of the preceding claims.
